# EUROPEAN PATENT SPECIFICATION

(11) **EP 3 310 192 B1**
(45) Date of publication and mention of the grant of the patent: **01.09.2021**
(21) Application number: 16734033.0
(22) Date of filing: 31.05.2016
(51) Int. Cl.: A23N 12/02, A23L 3/3589, A23B 7/158

(54) **DEVICE AND METHOD FOR WASHING LEAFY VEGETABLES**
VORRICHTUNG UND METHODE ZUM WASCHEN VON BLATTGEMÜSEN
DISPOSITIF ET PROCÉDÉ POUR LAVER DES LÉGUMES À FEUILLES

(30) Priority: 22.06.2015 IT UB20151560
(43) Date of publication of application: 25.04.2018
(73) Proprietor: La Linea Verde Societa' Agricola S.p.A., 25025 Manerbio (Brescia) (IT); Geoconfort S.r.l., 25121 Brescia (IT)
(72) Inventor: VITALI, Marco, 25050 Rodengo Saiano (Brescia) (IT)
(74) Representative: Inchingalo, Simona
(86) International application number: PCT/IB2016/053190
(87) International publication number: WO 2016/207746

(56) References cited:
- EP-A1- 0 983 728
- EP-A1- 1 836 908
- EP-A1- 2 572 587
- JP-A- H11 113 546
- US-A- 5 862 821
- US-A1- 2004 022 908
- US-A1- 2011 030 567

## Description

The present invention relates to a device and a method for washing leafy vegetables.

Leafy vegetables such as salad, chard, spinach and the like have always been bought in heads or bunches.

Before consumption, the product needs to be separated leaf by leaf, the best leaves are selected, any damaged ones are disposed of, and the remaining ones are washed repeatedly to remove any remains of soil or chemical agents used during cultivation.

Finally, the leaves washed and sterilised with suitable solutions in powder or liquids for domestic use, must be dried before use or, if not eaten immediately, before being stored in the refrigerator.

In order to accommodate the needs of normal families who increasingly have less time at their disposal, particularly to dedicate to cooking, mass retail has been providing the same vegetables for a number of years now to customers, defined as 4^{th} range products, sold in closed bags with leaves that have already been separated, selected, washed, disinfected and dried and that can be eaten straight away without any further treatments.

In the production process, after separating the leaves and selecting the best ones to be sold, the vegetables are washed carefully. The washing techniques envisage not only washing in water, but also the disinfection of the product to reduce the bacterial load normally present and thus increase the shelf life and freshness of the product.

The leaves are transferred into a hopper together with water and from there flow along a washing channel.

Chemical agents such as ozone, which is one of the few chemical agents allowed as a food disinfectant, are added to the washing water.

Since both the hopper and the channel are open at the top there may be some dispersion of ozone into the work environment, with potential risks for the operators' health. In fact, ozone concentrations in the work environment are established by precise legislation.

Furthermore, washing with the top open makes the final result less effective. In documents US 2004/022908, EP 1 836 908, EP 2 572 587, US 5 862 821, US 2011/030567, EP 0983 728 are disclosed examples of devices and methods for washing vegetables.

It is an object of the present invention to provide a device and a method for washing leafy vegetables that overcomes the drawbacks of the prior art.

It is also an object of the invention to provide a device and a method for washing leafy vegetables that allows the 4^{th} range product to be washed and disinfected guaranteeing a healthy work environment.

Furthermore, the object of the present invention is to provide a device and a method for washing leafy vegetables that maximises and optimises the mixing of ozone into water.

Finally, an object of the present invention is to provide a device and a method for washing leafy vegetables that maximises the washing effect guaranteeing an optimal result in terms of washing and disinfection of the 4^{th} range product.

These and other objects are substantially achieved by a device and a method for washing leafy vegetables according to the description given in one or more of the attached claims.

Further characteristics and advantages will more fully emerge from the detailed description of a preferred and not exclusive embodiment of a device and a method for washing leafy vegetables according to the present invention.

This description is provided with reference to the accompanying figures, which are also provided purely by way of illustrative and thus non-limiting example, of which:

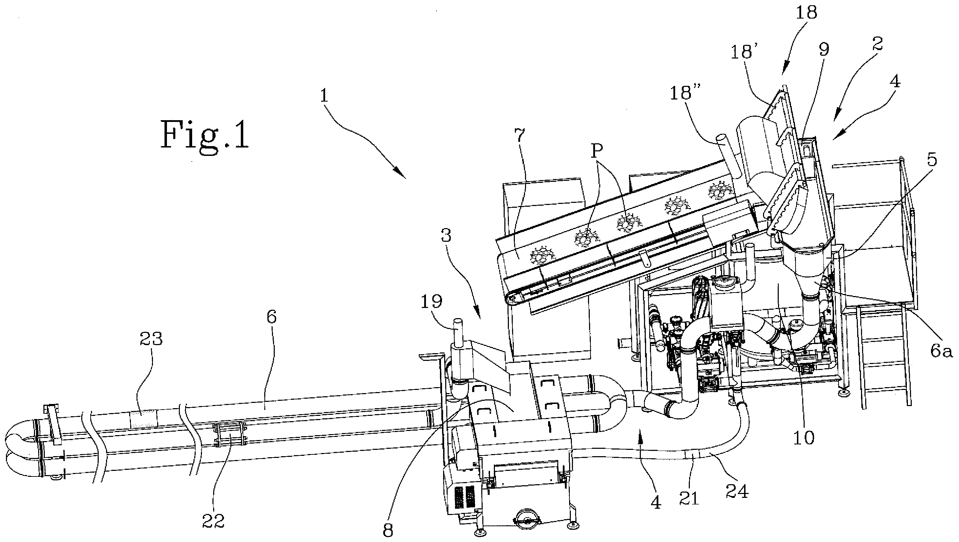

- Figure 1 is a first perspective view of a device for washing leafy vegetables according to the preferred embodiment of the present invention;

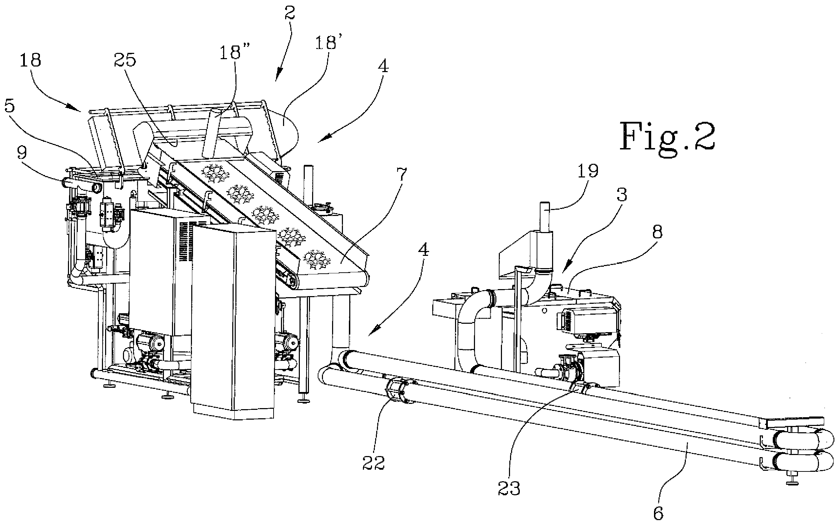

- Figure 2 is a second perspective view of a device for washing leafy vegetables according to the preferred embodiment of the present invention;

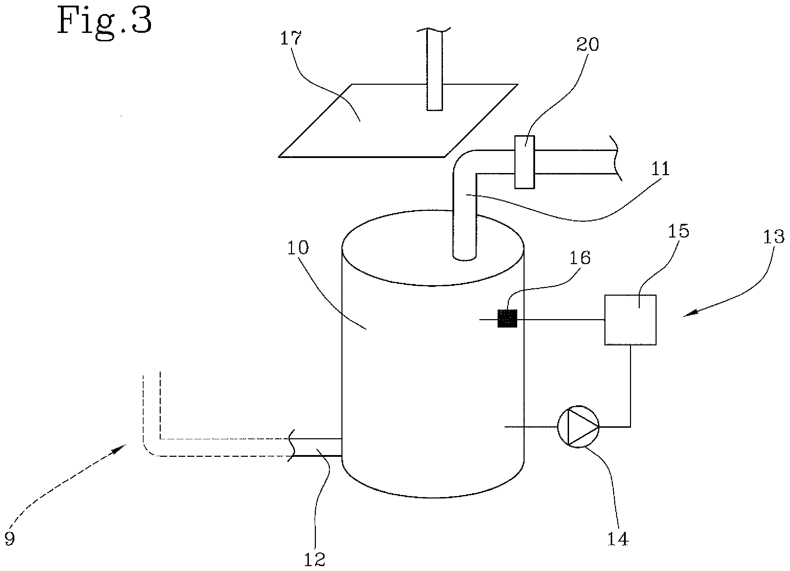

- Figure 3 is a schematic view of a detail of the device of Figures 1 and 2. The device for washing leafy vegetables has been indicated in its entirety in the appended figures with reference number 1.

This device 1 comprises a vegetable loading station 2 for vegetables to be washed P and a vegetable unloading station 3.

A washing and transport channel 4 places the loading station 2 and the unloading station 3 in communication, transporting the vegetables P from the first to the second station.

The washing and transport channel 4 comprises a collection tank 5, or a hopper, and a tube 6 inside of which the vegetables P are washed and transported to the loading station 3.

The tank 5 has a surface exposed to the surrounding environment which remains closed during operation. The tube 6 is a closed conduit which extends from the tank 5 to the unloading station 3.

A conveyor belt 7 feeds the leafy vegetables to the loading station 2, in particular to the collection tank 5. Likewise, another conveyor belt 8 receives the washed leafy vegetables P at the outlet from the tube 6 and appropriately separated from the washing liquid.

The leafy vegetables are washed using a washing liquid which fills the washing and transport channel 4.

In particular, the washing liquid is, preferably, water with added ozone.

The device 1 further comprises dispensing means 9 for dispensing the washing liquid, said dispensing means 9 being adapted to fill the channel 4, particularly the collection tank 5.

Such dispensing means 9 are in fluid connection with a mixing tank 10 within which ozone is added to the washing liquid before being poured into the washing and transport channel 4.

The mixing tank 10 comprises an inlet conduit 11 through which water enters, an outlet conduit 12 through which the washing liquid is sent to the dispensing means 9.

The water coming into the tank 10 is filtered through a first filter 20 located along the inlet conduit 11, immediately upstream of the tank 10.

A second filter 21 is located downstream of the washing path, in particular downstream of the tube 6 in proximity to the unloading station 3 after the washed leafy vegetables have been separated from the washing liquid.

This second filter 21 collects the remains of any leaves still in the liquid after separation from the washed vegetables.

The first filter 20 has a smaller mesh than the second filter 21 since it must effectively prevent the entry of any solid substance into the tank.

The tank 10 further comprises an ozonisation circuit for transforming the water at the inlet to the tank 10 into washing liquid at the outlet of tank.

The ozonisation circuit 13 comprises a pump 14, which takes the filtered water at the inlet to the tank 10, an ozone ejector 15, which adds ozone to the water taken, and an injector 16 which reintroduces the water with ozone into the tank 10.

The mixing of the water in the tank 10 allows optimal dissolution of ozone in water so as to minimise any dispersion of ozone into the atmosphere.

An ozone removal system 17 is located above the tank to aspirate any minimal dispersions of ozone that may arise in the surrounding air.

Above the collection tank 5 and above the unloading station 3, there are respective suction hoods 18 and 19 provided for the suctioning the quantities of ozone that may be released from the water when it is exposed to the surrounding environment.

The suction hood 18 located above the collection tank 5 is advantageously a cover 18' which keeps the exposed surface of the tank 5 closed, minimising the dispersion of ozone into the surrounding environment.

The cover 18' is mobile between an operative closed position, in which it is sealed onto the tank, and a non-operative position in which it is open to allow inspection of the tank 5.

The cover 18' has a through opening 25 to allow insertion of the leafy vegetables to be washed in the tank 5, when the cover 18' is in the operative closed position on the tank 5.

At the through opening 25 there is an ozone suction conduit 18" adapted to remove the ozone which is accidentally released into the air.

The collection tank 5 may preferably be of an elongated shape, but it could also be of different shapes or even be a simple hopper.

The dispensing means 9 are advantageously arranged along one side of the tank 5, preferably along the shortest one, so that the jet of liquid introduced into the tank 5 on one side pushes the leaves towards the opposite side, at which the inlet 6a of the washing tube 6 is located.

Preferably, along the washing tube 6 there is an ultrasound system 22 and/or a UV ray disinfectant system, both provided to increase the washing effect for the vegetables.

When the vegetable leaves are in the proximity of the unloading station 3, they are separated from the washing liquid and conveyed to a subsequent processing station. Appropriately filtered and with any remains of leaves cleaned out, the washing liquid is reintroduced into the washing circuit.

On that point, the device 1 also comprises a conduit 24 for recirculating the water after separation from the vegetables, to reintroduce the appropriately filtered water into the mixing tank 10.

The method for washing leafy vegetables therefore comprises the steps of feeding the selected leaves, using a conveyor belt 7, to the washing and transport channel 4 which comprises the collection tank 5 and the washing and transport tube 6. The most effective washing is performed inside the closed path defined by the tube 6.

The washing liquid, comprised of ozonised water, is introduced into the tank by specific dispensing means 9 so as to create a current able to push and drag the leaves towards the inlet of the tube 6. The continuous flow of the washing liquid inside the tank 5 promotes the movement of the flow of leaves inside the washing tube 6, up to the outlet of the tube 6 at the unloading station 3.

The method comprises the further step of ozonising the water used for washing, then adding ozone inside the tank 10 equipped with a suitable ozoniser. This procedure, which envisages the nebulisation of water and ozone in the tank, improves the mixing the ozone in the water.

Before being introduced into the tank and after separation from the washed vegetable leaves, the water is filtered.

Along the tube ultrasound and/or UV rays may be advantageously used to boost the washing effect.

The washing inside the tube, therefore in a closed system, allows the mixing effect of the ozone with the water to be maximised as well as increasing the contact of the product to be washed with the washing liquid.

Furthermore, the closed tube transport system, as well as the presence of suction hoods at the parts where the washing liquid is exposed to the surrounding environment, minimises the dispersion of ozone into the work environment.

## Claims

1. A device for washing leafy vegetables comprising a washing and transport channel (4) for vegetables to be washed and dispensing means (9) for dispensing a washing liquid into said channel (4), which comprises
- a mixing tank (10) in fluid connection with said dispensing means (9) for dispensing the washing liquid, inside which the washing liquid has ozone added to it before being poured back into the washing and transport channel (4);
- a first filter (20) positioned immediately upstream of the mixing tank (10), for filtering the washing liquid immediately before it enters the tank (10);
- a second filter (21) positioned downstream of the washing and transport channel (4), for filtering the washing liquid immediately after separation from the washed vegetables;
said washing and transport channel (4) comprising a tube (6) inside which the vegetables are washed and transported from a vegetable loading station (2) to an unloading station (3);
- said washing and transport channel (4) further comprises a collection tank (5) in fluid communication with said tube (6) and placed upstream thereof, into which the leafy vegetables are conveyed; **characterized in that** said collection tank (5) comprises an openable cover (18') able to close, at least partially, the exposed surface of said tank (5) to prevent the dispersion into the external environment of the ozone contained in the washing liquid; said cover (18') having a through opening connected to an ozone suction conduit (18").

2. The device according to the preceding claim, **characterised in that** said washing liquid comprises water and ozone dissolved therein.

3. The device according to one of the preceding claims, **characterised in that** said washing liquid dispensing means (9) are associated with said tank (5) for the introduction thereto of said washing liquid.

4. The device according to the preceding claim, **characterised in that** said mixing tank (10) comprises an inlet conduit (11) for filtered water, an outlet conduit (12) for the washing liquid and an ozonisation circuit (13) for transforming the filtered water coming into the mixing tank (10) into washing liquid leaving the tank (10).

5. The device according to the preceding claim, **characterised in that** said ozonisation circuit (13) comprises a pump (14) that takes water from the tank (10), an ozone injector (15), which adds ozone to the water taken, and a nebuliser (16) which reintroduces the water with ozone into the tank (10).

6. The device according to one of the preceding claims, **characterised in that** said first filter (20) has a smaller mesh than said second filter (21).

7. The device according to one of the preceding claims, **characterised in that** it comprises an aspirator (19) for aspirating the ozone separated from the washing liquid straight after separation from the washed vegetables.

8. The device according to one of the preceding claims, **characterised in that** it comprises a conduit (24) for recirculating the water after separation from the vegetables, to reintroduce the appropriately filtered water into the mixing tank (10).

9. The device according to one of the preceding claims, **characterised in that** it comprises an ultrasound system (22) for increasing the washing effect of the vegetables.

10. The device according to one of the preceding claims, **characterised in that** it comprises a UV ray disinfection system (23) for increasing the washing effect of the vegetables.

11. A method for washing leafy vegetables comprising the steps of feeding the leafy vegetables to be washed into a washing and transport channel (4), introducing through dispensing means (9) a washing liquid into said washing and transport channel (4), which comprises the further steps of filtering the washing liquid, adding ozone to the washing liquid and performing the washing within a tube (6) to prevent dispersions of ozone into the work environment and conveying said leafy vegetables into a collection tank (5), in fluid communication with said tube (6) and placed upstream thereof, which is **characterized in that** it comprises an openable cover (18') able to close, at least partially, the exposed surface of said tank (5) to prevent the dispersion into the external environment of the ozone contained in the washing liquid; said cover (18') having a through opening connected to an ozone suction conduit (18").

12. The method for washing leafy vegetables according to claim 11, comprising the step of using ultrasound to boost the washing effect.

13. The method for washing leafy vegetables according to any one of claims 11 or 12, comprising the step of using ultraviolet rays to boost the washing effect.

## Patentansprüche

1. Vorrichtung zum Waschen von Blattgemüsen, umfassend einen Waschund Transportkanal (4) für zu waschendes Gemüse und Dosiermittel (9) zum Dosieren einer Waschflüssigkeit in den genannten Wasch- und Transportkanal (4), die Folgendes umfasst:
- einen Mischtank (10) in strömungstechnischer Verbindung mit den genannten Dosiermitteln (9) zum Dosieren der Waschflüssigkeit, in dessen Inneren der Waschflüssigkeit Ozon hinzugefügt wird, bevor sie wieder in den Wasch- und Transportkanal (4) zurückgeleitet wird;
- einen ersten Filter (20), der dem Mischtank (10) unmittelbar vorgelagert ist, zum Filtern der Waschflüssigkeit unmittelbar vor ihrem Eintreten in den Mischtank (10);
- einen zweiten Filter (21), der dem Wasch- und Transportkanal (4) nachgelagert ist, zum Filtern der Waschflüssigkeit unmittelbar nach der Trennung von den gewaschenen Gemüsen;
wobei der genannte Wasch- und Transportkanal (4) ein Rohr (6) umfasst, in dem die Gemüse gewaschen und von einer Gemüseladestation (2) zu einer Entladestation (3) befördert werden;
- der genannte Wasch- und Transportkanal (4) umfasst weiter einen Sammeltank (5) in strömungstechnischer Verbindung mit dem genannten Rohr (6), der diesem vorgelagert platziert ist, in den die Blattgemüse befördert werden; **dadurch gekennzeichnet, dass** der genannten Sammeltank (5) eine öffenbare Abdeckung (18') umfasst, die geeignet ist, die freiliegende Oberfläche des genannten Sammeltanks (5) zumindest partiell zu verschließen, um das Austreten des in der Waschflüssigkeit enthaltenen Ozons in die Außenumgebung zu verhindern; wobei die genannte Abdeckung (18') eine mit einer Ozonansaugleitung (18") verbundene Durchgangsöffnung aufweist.

2. Vorrichtung nach dem vorangegangenen Anspruch, **dadurch gekennzeichnet, dass** die genannte Waschflüssigkeit Wasser und darin gelöstes Ozon umfasst.

3. Vorrichtung nach einem der vorangegangenen Ansprüche, **dadurch gekennzeichnet, dass** die genannten Dosiermittel (9) der Waschflüssigkeit mit dem genannten Sammeltank (5) verbunden sind, um die genannte Waschflüssigkeit in diesen einzuleiten.

4. Vorrichtung nach dem vorangegangenen Anspruch, **dadurch gekennzeichnet, dass** der genannte Mischtank (10) eine Einlassleitung (11) für gefiltertes Wasser, eine Auslassleitung (12) für die Waschflüssigkeit und einen Ozonisierungskreislauf (13) umfasst, um das in den Mischtank (10) eintretende gefilterte Wasser in den Mischtank (10) verlassende Waschflüssigkeit zu verwandeln.

5. Vorrichtung nach dem vorangegangenen Anspruch, **dadurch gekennzeichnet, dass** der genannte Ozonisierungskreislauf (13) eine dem Mischtank (10) Wasser entnehmende Pumpe (14), einen dem entnommenen Wasser Ozon hinzufügenden Ozoneinspritzer (15) und einen Zerstäuber (16), der das mit Ozon versetztes Wasser wieder zurück in den Mischtank (10) leitet, umfasst.

6. Vorrichtung nach einem der vorangegangenen Ansprüche, **dadurch gekennzeichnet, dass** der genannte erste Filter (20) ein feineres Netz als der genannte zweite Filter (21) aufweist.

7. Vorrichtung nach einem der vorangegangenen Ansprüche, **dadurch gekennzeichnet, dass** sie eine Absaugvorrichtung (19) zum Absaugen des direkt nach der Trennung von den gewaschenen Gemüsen von der Waschflüssigkeit getrennten Ozons umfasst.

8. Vorrichtung nach einem der vorangegangenen Ansprüche, **dadurch gekennzeichnet, dass** sie eine Leitung (24) zum Rückführen des Wassers nach der Trennung von den Gemüsen umfasst, um das entsprechend gefilterte Wasser wieder in den Mischtank (10) zurückzuleiten.

9. Vorrichtung nach einem der vorangegangenen Ansprüche, **dadurch gekennzeichnet, dass** sie ein Ultraschallsystem (22) zum Steigern der Waschwirkung auf die Gemüse umfasst.

10. Vorrichtung nach einem der vorangegangenen Ansprüche, **dadurch gekennzeichnet, dass** sie ein UV-Strahlen-Desinfektionssystem (23) zum Steigern der Waschwirkung auf die Gemüse umfasst.

11. Methode zum Waschen von Blattgemüsen, umfassend die Schritte des Zuführens von zu waschenden Blattgemüsen in einen Wasch- und Transportkanal (4), indem durch Dosiermittel (9) eine Waschflüssigkeit in den genannten Wasch- und Transportkanal (4) eingeleitet wird, die die weiteren Schritte des Filterns der Waschflüssigkeit, des Hinzufügens von Ozon zu der Waschflüssigkeit und des Durchführens des Waschvorgangs in einem Rohr (6), um das Austreten von Ozon in die Arbeitsumgebung zu vermeiden, und des Beförderns der genannten Blattgemüse in einen Sammeltank (5) in strömungstechnischer Verbindung mit dem genannten Rohr (6) umfasst, der diesem vorgelagert und **dadurch gekennzeichnet ist, dass** er eine öffenbare Abdeckung (18') umfasst, die geeignet ist, die freiliegende Oberfläche des genannten Mischtanks (5) mindestens partiell zu verschließen, um das Austreten des in der Waschflüssigkeit enthaltenen Ozons in die Außenumgebung zu verhindern; wobei die genannte Abdeckung (18') eine an eine Ozonansaugleitung (18") angeschlossene Durchgangsöffnung aufweist.

12. Methode zum Waschen von Blattgemüsen nach Anspruch 11, die den Schritt der Verwendung von Ultraschall zum Verstärken der Waschwirkung umfasst.

13. Methode zum Waschen von Blattgemüsen nach Anspruch 11 oder 12, die den Schritt der Verwendung von ultravioletten Strahlen zum Verstärken der Waschwirkung umfasst.

## Revendications

1. Dispositif et procédé pour laver des légumes à feuilles comprenant un canal de lavage et de transport (4) pour les légumes à laver et des moyens de distribution (9) pour distribuer un liquide de lavage dans ledit canal (4), qui comprend
- un réservoir de mélange (10) en communication fluidique avec lesdits moyens de distribution (9) pour distribuer le liquide de lavage, dans lequel on ajoute de l'ozone au liquide de lavage avant de le verser à nouveau dans le canal de lavage et de transport (4) ;
- un premier filtre (20) positionné immédiatement en amont du réservoir de mélange (10), pour filtrer le liquide de lavage immédiatement avant qu'il n'entre dans le réservoir (10) ;
- un second filtre (21) positionné en aval du canal de lavage et de transport (4), pour filtrer le liquide de lavage immédiatement après la séparation des légumes lavés ;
ledit canal de lavage et de transport (4) comprenant un tube (6) dans lequel les légumes sont lavés et transportés d'une station de chargement (2) des légumes à une station de déchargement (3) ;
- ledit canal de lavage et de transport (4) comprend en outre un réservoir de collecte (5) en communication fluidique avec ledit tube (6) et placé en amont de celui-ci, dans lequel les légumes à feuilles sont acheminés ; **caractérisé en ce que** ledit réservoir de collecte (5) comprend un couvercle ouvrable (18') capable de fermer, au moins partiellement, la surface exposée dudit réservoir (5) pour empêcher la dispersion dans l'environnement externe de l'ozone contenu dans le liquide de lavage ; ledit couvercle (18') ayant une ouverture traversante reliée à un conduit d'aspiration d'ozone (18").

2. Dispositif selon la revendication précédente, **caractérisé en ce que** ledit liquide de lavage comprend de l'eau et de l'ozone dissous dans celui-ci.

3. Dispositif selon l'une des revendications précédentes, **caractérisé en ce que** ledit liquide de lavage et lesdits moyens de distribution (9) sont associés audit réservoir (5) pour l'introduction dans celui-ci dudit liquide de lavage.

4. Dispositif selon la revendication précédente, **caractérisé en ce que** ledit réservoir de mélange (10) comprend un conduit d'entrée (11) pour de l'eau filtrée, un conduit de sortie (12) pour le liquide de lavage et un circuit d'ozonisation (13) pour transformer l'eau filtrée entrant dans le réservoir de mélange (10) en liquide de lavage sortant du réservoir (10).

5. Dispositif selon la revendication précédente, **caractérisé en ce que** ledit circuit d'ozonisation (13) comprend une pompe (14) qui prélève de l'eau du réservoir (10), un injecteur d'ozone (15), qui ajoute de l'ozone à l'eau prélevée, et un nébuliseur (16) qui réintroduit l'eau avec l'ozone dans le réservoir (10).

6. Dispositif selon l'une des revendications précédentes, **caractérisé en ce que** ledit premier filtre (20) a une maille inférieure à celle dudit second filtre (21).

7. Dispositif selon l'une des revendications précédentes, **caractérisé en ce qu'**il comprend un aspirateur (19) pour aspirer l'ozone séparé du liquide de lavage immédiatement après la séparation des légumes lavés.

8. Dispositif selon l'une des revendications précédentes, **caractérisé en ce qu'**il comprend un conduit (24) pour la recirculation de l'eau après la séparation des légumes, pour réintroduire l'eau filtrée de manière appropriée dans le réservoir de mélange (10).

9. Dispositif selon l'une des revendications précédentes, **caractérisé en ce qu'**il comprend un système à ultrasons (22) pour augmenter l'effet de lavage des légumes.

10. Dispositif selon l'une des revendications précédentes, **caractérisé en ce qu'**il comprend un système de désinfection par rayons UV (23) pour augmenter l'effet de lavage des légumes.

11. Procédé pour laver des légumes à feuilles comprenant les étapes d'alimentation des légumes à feuilles à laver dans un canal de lavage et de transport (4), introduisant par les moyens de distribution (9) un liquide de lavage dans ledit canal de lavage et de transport (4), qui comprend les étapes supplémentaires de filtration du liquide de lavage, d'ajout d'ozone au liquide de lavage et la réalisation du lavage dans un tube (6) pour empêcher des dispersions d'ozone dans l'environnement de travail et l'acheminement desdits légumes à feuilles dans un réservoir de collecte (5), en communication fluidique avec ledit tube (6) et placé en amont de celui-ci, qui est **caractérisé en ce qu'**il comprend un couvercle ouvrable (18') capable de fermer, au moins partiellement, la surface exposée dudit réservoir (5) pour empêcher la dispersion dans l'environnement externe de l'ozone contenu dans le liquide de lavage ; ledit couvercle (18') ayant une ouverture traversante reliée à un conduit d'aspiration d'ozone (18").

12. Procédé pour laver des légumes à feuilles selon la revendication 11, comprenant l'étape d'utilisation d'ultrasons pour renforcer l'effet de lavage.

13. Procédé pour laver des légumes à feuilles selon l'une quelconque des revendications 11 ou 12, comprenant l'étape d'utilisation de rayons ultraviolets pour renforcer l'effet de lavage.
